# EUROPÄISCHE PATENTSCHRIFT

(11) **EP 1 303 753 B1**
(45) Veröffentlichungstag und Bekanntmachung des Hinweises auf die Patenterteilung: **15.02.2006**
(21) Anmeldenummer: 01962555.7
(22) Anmeldetag: 12.07.2001
(51) Int. Cl.: G01N 27/407

(54) **PLATINMETALLHALTIGE CERMETELEKTRODEN FÜR DIE ELEKTROCHEMISCHE REDUKTION VON SAUERSTOFF**
CERMET ELECTRODES CONTAINING PLATINUM FOR THE ELECTROCHEMICAL REDUCTION OF OXYGEN
ELECTRODES CERMET CONTENANT DU METAL DU GROUPE DU PLATINE ET DESTINEES A LA REDUCTION ELECTROCHIMIQUE D'OXYGENE

(30) Priorität: 12.07.2000 DE 10033906
(43) Veröffentlichungstag der Anmeldung: 23.04.2003
(73) Patentinhaber: ROBERT BOSCH GMBH, 70442 Stuttgart (DE)
(72) Erfinder: LEHMANN, Dieter, 71287 Weissach (DE); HEIMANN, DETLEF, 70839 Gerlingen (DE); OEHLER, Gudrun, 70435 Stuttgart (DE); THIEMANN-HANDLER, Sabine, 70435 Stuttgart (DE)
(86) Internationale Anmeldenummer: PCT/DE2001/002608
(87) Internationale Veröffentlichungsnummer: WO 2002/004934

(56) Entgegenhaltungen:
- EP-A- 0 388 558
- EP-A- 0 485 085
- WO-A-00/30194
- DE-A- 4 240 267
- US-A- 4 283 441
- US-A- 4 812 329
- US-A- 5 616 223
- US-A- 5 908 713
- PATENT ABSTRACTS OF JAPAN vol. 018, no. 478 (P-1796), 6. September 1994 (1994-09-06) & JP 06 160332 A (UNISIA JECS CORP), 7. Juni 1994 (1994-06-07)
- PANTU P ET AL: "Methane partial oxidation on Pt/CeO2-ZrO2 in the absence of gaseous oxygen" APPLIED CATALYSIS A: GENERAL, ELSEVIER SCIENCE, AMSTERDAM, NL, Bd. 193, Nr. 1-2, 28. Februar 2000 (2000-02-28), Seiten 203-214, XP004272192 ISSN: 0926-860X

## Beschreibung

### Stand der Technik

Die Erfindung betrifft Platinmetall-Cermetelektroden für die elektrochemische Reduktion von O₂, deren Keramikanteil stabilisiertes ZrO₂ als Hauptbestandteil enthält.

Die elektrochemische Reduktion von Sauerstoff spielt in Gassensoren für die Analyse von O₂ enthaltenden Gasgemischen eine Rolle. Solche Gassensoren sind beispielsweise in DE 39 34 586 A1, DE 42 40 267 A1 und DE 198 33 087 A1 beschrieben. Die dabei eingesetzten Platinmetall-Cermetelektroden sind auf Substrate aus Y-stabilisiertem ZrO2 gedruckt. Die Platinmetall-Cermetelektroden weisen standardmäßig einen keramischen Anteil von 40 Vol.-% (das sog. Stützgerüst) und 60 Vol.-% Metallanteil auf. Das Stützgerüst besteht hauptsächlich aus Y-stabilisiertem ZrO2, das bezogen auf den ZrO2-Anteil größenordnungsmäßig 10 Gew.-% Y2O3 enthält. Durch den keramischen Zusatz soll zum einen eine gewisse Porosität des Elektrodenmaterials gewährleistet werden, und zum anderen soll die elektrochemisch wirksame Dreiphasengrenze von der eigentlichen Berührungsfläche zwischen Substrat und Elektrode aufgrund der ionischen Leitfähigkeit des Stützgerüstes bis in Bereiche der Elektrode hinein ausgedehnt werden. Die mit den bekannten Elektroden erzielten O2-Pumpströme sind noch nicht zufrieden stellend.

Weiterhin ist aus der US 5,616,223 ein keramisches Kompositmaterial bekannt, das keramische und metallische Bestandteile enthält. Dabei weist das Kompositmaterial zwischen 10 und 70 Vol.-% einer Elektronen leitenden Metallphase und zwischen 30 und 90 % einer Sauerstoff leitenden, keramischen Phase auf.

### Die Erfindung und ihre Vorteile

Es ist die Aufgabe der Erfindung, Platinmetall-Cermetelektroden anzugeben, an denen die elektrochemische Sauerstoff reduktion gegenüber der an bekannten Platinmetall-Cermetelektroden erleichtert ist.

Diese Aufgabe wird mit Platinmetall-Cermetelektroden der eingangs genannten Art mit dem Merkmal des kennzeichnenden Teils des Anspruchs 1 gelöst. Der Polarisationswiderstand wird weiter unten definiert.

Gemäß der Erfindung läßt sich der Polarisationswiderstand der Elektrode dadurch reduzieren, daß das Metall:Keramik-Verhältnis in der Elektrode (in Vol.-%) zwischen 70:30 und 80:20 gelegt wird. Offenbar kompensieren sich, wenn das Verhältnis in den erfindungsgemäßen Bereich gelegt wird, die für einen geringen Polarisationswiderstand günstige Wirkung eines hohen Metallanteils und die den Polarisationswiderstand vergrößernde Wirkung einer geringen Porosität (wegen des relativ geringen Keramikanteils) derart, daß der Polarisationswiderstand gegenüber dem Standardverhältnis (60:40) abnimmt.

Gemäß einer vorteilhaften Ausgestaltung der Erfindung wird der Polarisationswiderstand der Elektrode reduziert, indem zwischen etwa 0,01 und etwa 1 Gew.-% des stabilisierten ZrO₂ durch stabilisiertes CeO₂ ersetzt wird. Durch den Ersatz einer geringen Menge des ZrO₂ durch CeO₂ läßt sich eine beachtliche Reduzierung des Polarisationswiderstands und dadurch wesentlich höhere O₂-Reduktionsströme als beim Einsatz von Standardelektroden erzielen.

Noch vorteilhafter ist es, wenn zwischen etwa 0,02 und etwa 0,1 Gew.-% stabilisiertes ZrO₂ durch stabilisiertes CeO₂ ersetzt ist, da dann der Polarisationswiderstand besonders niedrig ist.

Zwar ist es aus der o.g. DE 42 40 267 A1 bekannt, daß der Metallanteil in Pt-Cermetelektroden im allgemeinen zwischen 50 und 80 Vol.-% liegt. Außerdem ist aus der DE 42 40 267 A1 bekannt, daß sich an Stelle von oder neben ZrO₂ auch andere Metalloxide, wie CeO₂, als Ionenleiter im Festelektrolyt einsetzen lassen. Nicht bekannt ist aber die Anwendung der genannten Bereiche des Metall:Keramik-Verhältnisses und/oder des ZrO₂:CeO₂-Verhältnisses und insbesondere ist nicht bekannt und durch den St.d.T. auch nicht nahegelegt, daß bei Einhaltung der genannten Bereiche der Polarisationswiderstand vermindert werden kann.

Es ist günstig, wenn das CeO₂ mit einem Oxid aus der Gruppe Y₂O₃, Gd₂O₃, Sc₂O₃ und HfO₂ stabilisiert ist.

Die erfindungsgemäßen Elektroden sind in vorteilhafter Weise in Gassensoren beim Abpumpen von O₂ aus O₂ enthaltenden Meßgasen einsetzbar.

Weitere vorteilhafte Ausgestaltungen der erfindungsgemäßen Platinmetall-Cermetelektroden sind in den Unteransprüchen aufgeführt.

### Die Zeichnung

Im folgenden wird die Erfindung anhand von durch Zeichnungen erläuterten Ausführungsbeispielen detailliert beschrieben. Es zeigen
Fig. 1 in schematischer Querschnittsdarstellung eine Anordnung zur Veranschaulichung der Erfindung,
Fig. 2 in einem Diagramm, in dem O₂-Reduktionsströme gegen die angelegte Spannung für unterschiedliche Gehalte an Y-stabilisiertem CeO₂ in der Keramikmatrix gemäß einem Aspekt der Erfindung aufgetragen sind, und
Fig. 3 in einem Diagramm, in dem O₂-Reduktionsströme gegen die angelegte Spannung für unterschiedliche Metall:Keramik-Verhältnisse aufgetragen sind.

Im folgenden wird die Erfindung am Beispiel von bestimmten Pt-Cermetelektroden beschrieben. Es sei aber klargestellt, dass zwar die Erfindung im Zusammenhang mit solchen Pt-Cermetelektroden besonders vorteilhaft einsetzbar ist und sich besonders anschaulich erläutern lässt, dass aber von diesem Beispiel im Rahmen der Ansprüche mannigfaltige Abweichungen möglich sind.

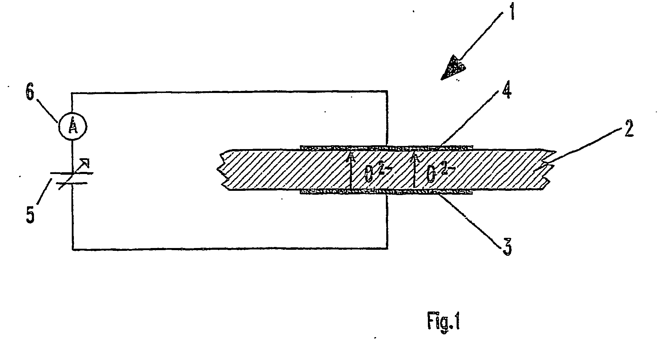

Die in Fig. 1 gezeigte Anordnung 1 enthält ein dünnes Substrat 2 aus einem hochgasdichten festen Elektrolytmaterial mit Sauerstoffionenleitfähigkeit, wie Y-stabilisiertem ZrO₂, auf dessen beiden Oberflächen einander gegenüberliegend Pt-Cermetelektroden 3 und 4 aufgebracht sind. Die beiden Elektroden sind mit einer Gleichspannungsquelle 5 derart elektrisch verbunden, dass die Elektrode 3 die Kathode und die Elektrode 4 die Anode ist. In eine der Zuleitungen ist zur Erfassung des Stroms ein Strommesser 6 eingebaut.

Alternativ kann der Metallanteil in den Elektroden aus einem anderen Platinmetall bzw. aus Mischungen solcher Elemente, wie Pt/Rh, Pt/Ir oder Pt/Pd, bestehen. Um die Erfindung zu demonstrieren, wurde mindestens in der als Kathode geschalteten Elektrode bei einer Versuchsreihe unterschiedliche Anteile des Y-stabilisierten ZrO₂ durch stabilisiertes CeO₂ ersetzt und bei einer weiteren Versuchsreihe des Metall:Keramikverhältnis variiert.

Wird ein O₂ enthaltender Gasstrom an der in der Fig. 1 gezeigten, beheizten Anordnung vorbeigeleitet, findet, wenn die Elektroden unter Spannung stehen, an der als Kathode geschalteten Elektrode, eine elektromechanische Reduktion von O₂ statt und ein entsprechender O²⁻ - Strom fließt zwischen den Elektroden. Ein Maß für die Reduktionsaktivität der Elektrode ist der sog. Polarisationswiderstand (Rp). Der Rp ist eine aus der Anfangssteigung der kathodischen I/U-Kennlinie berechnete Größe, die ein Maß dafür ist, welchen Widerstand die Elektrode der O₂-Reduktion entgegensetzt. Der Rp sollte möglichst klein sein.

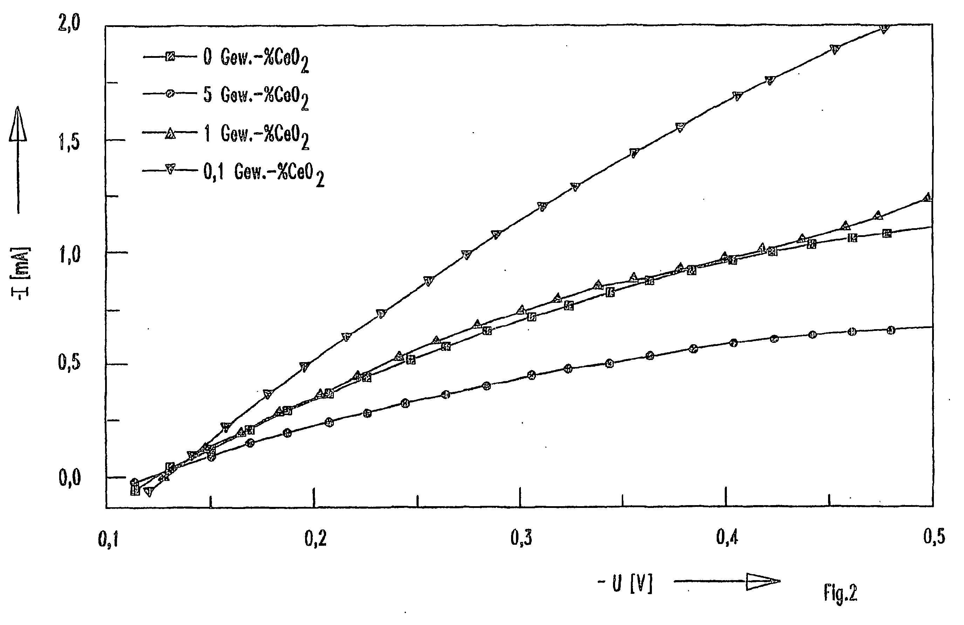

Die Erfinder haben festgestellt, daß sich der Polarisationswiderstand gegenüber dem für Standardelektroden bestimmten vermindert, wenn eine bestimmte Menge des Y-stabilisierten ZrO₂ durch Y-stabilisiertes CeO₂ entsprechend der Formel Ce_{0,84}Y_{0,16}O_{1,92} ersetzt wird. Die kathodischen I/U-Kennlinien in der Fig. 2 zeigen, daß, wenn etwa 0,1 Gew.-% Y-stabilisiertes ZrO₂ durch Y-stabilisiertes CeO₂ (molares Verhältnis Y-stab. ZrO₂:Y-stab. CeO₂ = 0,999:0,0008) ersetzt wird, der Polarisationswiderstand niedriger ist, als wenn 1 oder 5 Gew.-% Y-stabilisiertes ZrO₂ durch Y-stabilisiertes CeO₂ (molares Verhältnis Y-stab. ZrO₂: Y-stab. CeO₂ = 0,99:0,0084 bzw. Y-stab. ZrO₂:Y-stab. CeO₂ = 0,959:0,0405) ersetzt wird oder wenn das ZrO₂ kein CeO₂ enthält. Die Kennlinien basieren auf Meßdaten, welche an der auf etwa 700 °C erhitzten Anordnung 1 (s. Fig.1) beim Vorbeiströmen eines N₂ und 500 ppm O₂ enthaltenden Meßgases erhalten wurden.

Entsprechende Ergebnisse lassen sich erzielen, wenn das CeO₂ statt mit Y₂O₃ mit einem Oxid aus der Gruppe Sc₂O₃, Gd₂O₃ und HfO₂ stabilisiert ist. Bei Verwendung von Gd₂O₃ ist das stabilisierte CeO₂ vorteilhaft entsprechend der Formel Ce_{0,8}Gd_{0,2}O_{1,9} zusammengesetzt.

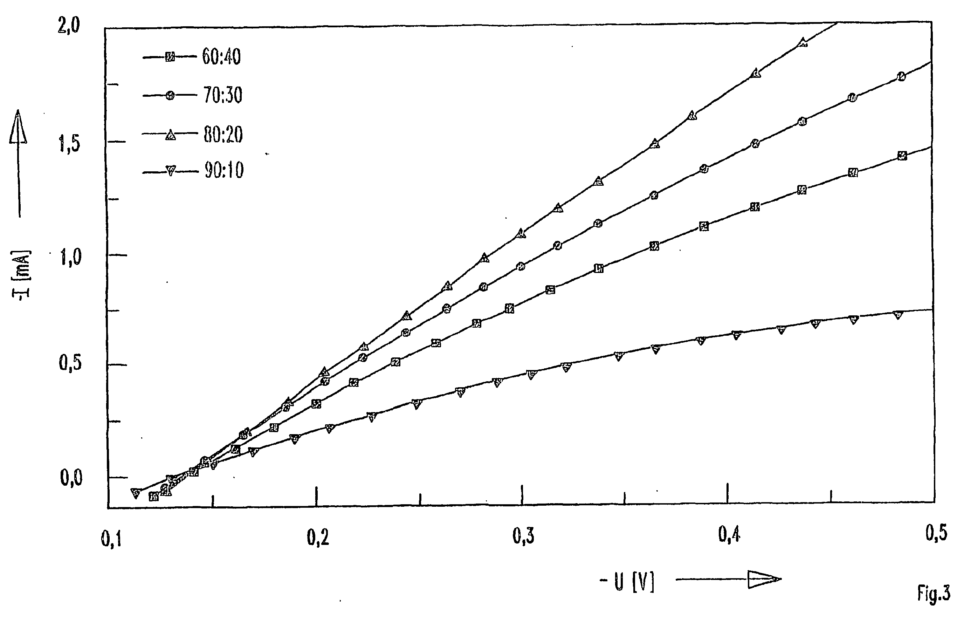

Die Erfinder konnten außerdem zeigen, daß der Polarisationswiderstand sich durch Variation des Metall:Keramikverhältnisses in den Elektroden (zum mindesten in der als Kathode geschalteten Elektrode 3) beeinflussen läßt. Die kathodischen I/U-Kennlinien in der Fig. 3 belegen, daß der Polarisationswiderstand niedriger liegt, wenn das Metall:Keramikverhältnis im Bereich zwischen etwa 70:30 und etwa 80:20 liegt, als wenn das Verhältnis dem Standardwert (60:40) entspricht oder deutlich oberhalb von 80:20 liegt. Die Kennlinien basieren auf Meßdaten, welche an der auf etwa 700 °C erhitzten Anordnung 1 (s- Fig.1) beim Vorbeiströmen eines N₂ und 500 ppm O₂ enthaltenden Meßgases erhalten wurden.

Die berechneten Polarisationswiderstände lagen bei in der Tabelle angegebenen Werten:

**Tabelle**

| Metall:Keramikverhältnis (vol.-%) | Rp (Ω) |
|---|---|
| 60:40 | 83,7 |
| (Standard) | |
| 70:30 | 55,3 |
| 80:20 | 50,6 |
| 90:10 | 221,5 |

Zur Herstellung standardmäßiger, auf einem Festelektrolytsubstrat aufgebrachten Pt-Cermetelektroden werden eine aus ZrO₂, stabilisierendem Y₂O₃ und üblichen Zusätzen geformte Vorstufe des Festelektrolytkörpers und eine Suspension vorbereitet, welche im Volumverhältnis 60:40 Pt-Pulver und einen entsprechend feinteilig vorgeformten Keramikvorläufer aus einer Rohstoffmischung von festgelegten Gewichtsmengen ZrO₂ und Y₂O₃ und gegebenenfalls einer geringen Menge - beispielsweise - Al₂O₃ enthält, wobei die Keramikkomponenten mit dem Pt-Pulver angepastet sind. Mit der Paste wird dann der ungesinterte Festelektolytkörper in einer Schichtdicke von 10 bis 30µm bedruckt, anschließend wird getrocknet und schließlich werden die Paste und das Festelektrolytsubstrat zwischen etwa 1300 und etwa 1600°C fest zusammengesintert.

Sollen Elektroden hergestellt werden, die sich von den Standardelektroden nur durch ein größeres Metall:Keramikverhältnis unterscheiden, kann, abgesehen vom Einsatz relativ größerer Pt-Pulvermengen, genau so wie oben beschrieben vorgegangen werden.

Sollen Elektroden hergestellt werden, bei denen ein Teil des Y-stabilisierten ZrO₂ durch Y- oder Gd-stabilisiertes CeO₂ ersetzt ist, werden ein Ce-Salz und ein Y- bzw. ein Gd-Salz im richtigen Verhältnis gemeinsam ausgefällt, getrocknet, kalziniert und dann in der festgelegten Menge zu der Y₂O₃ und ZrO₂ enthaltenden Rohstoffmischung zugegeben. Abgesehen von diesen zusätzlichen Verfahrensschritten wird das Herstellungsverfahren wie oben beschrieben durchgeführt.

Die in der Fig. 1 gezeigte Anordnung 1 wird vorteilhaft in einem Gassensor zur Analyse von O₂-haltigen Gasgemischen als Teil einer Pumpzelle zum Abpumpen von O₂ aus den Meßgasen eingesetzt, wobei mindestens die Kathode erfindungsgemäß ausgebildet ist.

## Patentansprüche

1. Platinmetall-Cermetelektrode für die elektrochemische Reduktion von Sauerstoff, deren Keramikanteil stabilisiertes ZrO2 als Hauptbestandteil enthält, **dadurch gekennzeichnet, dass** die Elektrode zur Reduzierung ihres Polarisationswiderstandes ein Metall:Keramik-Verhältnis (in Vol.%) zwischen 70:30 und 80:20 aufweist.

2. Cermetelektrode nach Anspruch 1, **dadurch gekennzeichnet, dass** zwischen etwa 0,01 und etwa 1 Gew.-% stabilisiertes ZcO₂ durch stabilisiertes CeO₂ ersetzt ist.

3. Cermetelektrode nach Anspruch 2, **dadurch gekennzeichnet, dass** zwischen etwa 0,02 und etwa 0,1 Gew.% stabilisiertes ZrO₂ durch stabilisiertes CeO₂ ersetzt ist.

4. Cermetelektrode nach Anspruch 3 oder 3, **dadurch gekennzeichnet, dass** das CeO₂ mit einem Oxid aus der Gruppe Y₂O₃, Gd₂O₃, Sc₂O₃ und HfO₂ stabilisiert ist.

5. Cermetelektrode nach einem der Ansprüche 2 bis 4, **dadurch gekennzeichnet, dass** das mit einem Oxid eines dreiwertigen Metalls stabilisierte CeO2 etwa entsprechend der Formel Ce_{0,8}Me^{III}₀, 2^{O}1,9 zusammengesetzt ist.

6. Cermetelektrode nach Anspruch 5, **dadurch gekennzeichnet, dass** das mit Gd₂O₃ stabilisierte CeO₂ entsprechend der Formel Ce_{0,8}Gd_{0,}2⁰1,9 zusammengesetzt ist.

7. Cermetelektrode nach Anspruch 5, **dadurch gekennzeichnet, dass** das mit Y₂O₃ stabilisierte CeO₂ entsprechend der Formel Ce_{0,775}Y_{0,225}O_{1,88} zusammengesetzt ist.

8. Cermetelektrode nach einem der Ansprüche 1 bis 7, **dadurch gekennzeichnet, dass** das ZrO₂ mit Y₂O₃ stabilisiert ist.

9. Cermetelektrode nach Anspruch 8, **dadurch gekennzeichnet, dass** bezogen auf die ZrO₂-Menge etwa 8 bis etwa 15 Gew.% Y₂O₃ vorhanden sind.

10. Cermetelektrode nach einem der Ansprüche 1 bis 9, **dadurch gekennzeichnet, dass** das Platinmetall mindestens ein Metall aus der Gruppe Pt, Rh, Ir, und Pd ist.

11. Cermetelektrode nach Anspruch 10, **dadurch gekennzeichnet, dass** der Metallanteil der Cermetelektrode aus einem Metall bzw. einer Metalllegierung aus der Gruppe Pt, Pt/Rh, Pt/r und Pt/Pd ausgewählt ist.

12. Cermetelektrode nach einem der Ansprüche 1 bis 11, **gekennzeichnet durch** ihre Anwendung in einer O₂ reduzierenden Anordnung aus einem stabilisiertes ZrO₂ enthaltenden Festelektrolytsubstrat und beidseitig auf das Substrat aufgebrachten und mit einer Spannungsquelle verbundenen Platinmetall-Cermetelektroden.

13. Cermetelektrode nach Anspruch 12, **dadurch gekennzeichnet, dass** sie zum mindesten die Kathode der O₂ reduzierenden Anordnung bildet.

14. Cermetelektrode nach einem der Ansprüche 1 bis 13, **gekennzeichnet durch** ihre Anwendung in Gassensoren zum Abpumpen von O₂ aus O₂ enthaltenden Messgasen.

## Claims

1. Platinum metal cermet electrode for the electrochemical reduction of oxygen, the ceramic fraction of which contains stabilized ZrO₂ as its main constituent, **characterized in that** to reduce its polarization resistance, the electrode has a metal:ceramic ratio (in % by volume) of between 70:30 and 80:20.

2. Cermet electrode according to Claim 1, **characterized in that** between approximately 0.01 and approximately 1% by weight of the stabilized ZrO₂ is replaced by stabilized CeO₂.

3. Cermet electrode according to Claim 2, **characterized in that** between approximately 0.02 and approximately 0.1% by weight of stabilized ZrO₂ is replaced by stabilized CeO₂.

4. Cermet electrode according to Claim 2 or 3, **characterized in that** the CeO₂ is stabilized with an oxide selected from the group consisting of Y₂O₃, Gd₂O₃, Sc₂O₃ and HfO₂.

5. Cermet electrode according to one of Claims 2 to 4, **characterized in that** the CeO₂ which has been stabilized with an oxide of a trivalent metal has a composition approximately corresponding to the formula Ce_{0.8}Me^{III}_{0.2}O_{1.9}.

6. Cermet electrode according to Claim 5, **characterized in that** the CeO₂ which has been stabilized with Gd₂O₃ has a composition corresponding to the formula Ce_{0.8}Gd_{0.2}O_{1.9}.

7. Cermet electrode according to Claim 5, **characterized in that** the CeO₂ which has been stabilized with Y₂O₃ has a composition corresponding to the formula Ce_{0.775}Y_{0.225}O_{1.88}.

8. Cermet electrode according to one of Claims 1 to 7, **characterized in that** the ZrO₂ is stabilized with Y₂O₃.

9. Cermet electrode according to Claim 8, **characterized in that** approximately 8 to approximately 15% by weight of Y₂O₃ are present, based on the quantity of ZrO₂.

10. Cermet electrode according to one of Claims 1 to 9, **characterized in that** the platinum metal is at least one metal selected from the group consisting of Pt, Rh, Ir and Pd.

11. Cermet electrode according to Claim 10, **characterized in that** the metal fraction of the cermet electrode is selected from a metal or metal alloy from the group consisting of Pt, Pt/Rh, Pt/Ir and Pt/Pd.

12. Cermet electrode according to one of Claims 1 to 11, **characterized by** its use in an O₂-reducing arrangement made up of a solid electrolyte substrate containing stabilized ZrO₂ and of platinum metal cermet electrodes applied to both sides of the substrate and connected to a voltage source.

13. Cermet electrode according to Claim 12, **characterized in that** it forms at least the cathode of the O₂-reducing arrangement.

14. Cermet electrode according to one of Claims 1 to 13, **characterized by** its use in gas sensors for pumping O₂ out of measurement gases which contain O₂.

## Revendications

1. Electrode en cermet et métal de platine pour la réduction électromagnétique de l'oxygène dont la fraction céramique contient du Zr02 stabilisé en tant que composant principal,
**caractérisée en ce que**
l'électrode présente un rapport métal/céramique (en % en volume) compris entre 70:30 et 80:20 pour réduire sa résistance à la polarisation.

2. Electrode en cermet selon la revendication 1,
**caractérisée en ce qu'**
entre 0,01 environ et 1 % en poids environ de ZrO₂ stabilisé est remplacé par du CeO₂ stabilisé.

3. Electrode en cermet selon la revendication 2,
**caractérisée en ce qu'**
entre 0,02 environ et 0,1 % en poids environ de ZrO₂ est remplacé par du CeO₂ stabilité.

4. Electrode en cermet selon la revendication 2 ou 3,
**caractérisée en ce que**
le CeO₂ est stabilisé avec un oxyde du groupe constitué de Y₂O₃, Gd₂O₃, Sc₂O₃ et HfO₂.

5. Electrode en cermet selon l'une quelconque des revendications 2 à 4,
**caractérisée en ce que**
le CeO₂ stabilisé avec un oxyde d'un métal trivalent a une composition approximative correspondant à la formule Ce_{0,8}Me^{III}_{0,2}O_{1,9}.

6. Electrode en cermet selon la revendication 5,
**caractérisée en ce que**
le CeO₂ stabilisé avec du Gd₂O₃ a une composition approximative correspondant à la formule Ce_{0,8}Gd_{0,2}O_{1,9}.

7. Electrode en cermet selon la revendication 5,
**caractérisée en ce que**
le CeO₂ stabilisé avec du Y₂O₃ a une composition approximative correspondant à la formule Ce_{0,775}Y_{0,225}O_{1,88}.

8. Electrode en cermet selon l'une quelconque des revendications 1 à 7,
**caractérisée en ce que**
le ZrO₂ est stabilisé avec du Y₂O₃.

9. Electrode en cermet selon la revendication 8,
**caractérisée en ce qu'**
elle renferme environ 8 à environ 15 % en poids de Y₂O₃ par rapport à la quantité de ZrO₂.

10. Electrode en cermet selon l'une quelconque des revendications 1 à 9,
**caractérisée en ce que**
le métal de platine est au moins un métal du groupe constitué de Pt, Rh, Ir et Pd.

11. Electrode en cermet selon l'une quelconque des revendications 1 à 10,
**caractérisée en ce que**
la fraction de métal de l'électrode en cermet est choisie parmi un métal respectivement un alliage de métal du groupe constitué de Pt, Pt/Rh, Pt/Ir et Pt/Pd.

12. Electrode en cermet selon l'une quelconque des revendications 1 à 11,
**caractérisée par**
son utilisation dans une disposition, réduisant l'O₂, constituée d'un substrat d'électrolyte solide contenant du ZrO₂ stabilisé et d'électrodes en cermet et métal de platine placées des deux côté sur le substrat et reliées à une source de tension.

13. Electrode en cermet selon la revendication 12,
**caractérisée en ce qu'**
elle constitue au moins la cathode du dispositif réducteur d'O₂.

14. Electrode en cermet selon l'une quelconque des revendications 1 à 13,
**caractérisée par**
son utilisation dans des capteurs de gaz pour pomper l'O₂ de gaz de mesure contenant du O₂.
